# EUROPÄISCHE PATENTSCHRIFT

(11) **EP 1 346 506 B1**
(45) Veröffentlichungstag und Bekanntmachung des Hinweises auf die Patenterteilung: **07.07.2004**
(21) Anmeldenummer: 01990496.0
(22) Anmeldetag: 04.12.2001
(51) Int. Cl.: H04L 7/00, H04B 7/005, H04B 7/08, H04H 1/00, H04J 3/06

(54) **VERFAHREN UND ANORDNUNG ZUM DIGITALEN EMPFANG EINES SIGNALS**
METHOD AND ARRANGEMENT FOR DIGITALLY RECEIVING A SIGNAL
PROCEDE ET DISPOSITIF POUR LA RECEPTION NUMERIQUE D'UN SIGNAL

(30) Priorität: 22.12.2000 DE 10064498
(43) Veröffentlichungstag der Anmeldung: 24.09.2003
(73) Patentinhaber: DaimlerChrysler AG, 70567 Stuttgart (DE)
(72) Erfinder: BÖHM, Konrad, 89134 Blaustein (DE); LUY, Johann-Friedrich, 89073 Ulm (DE); MÜLLER, Thomas, 89075 Ulm (DE); SCHNEPP, Harald, 89257 Illertissen (DE)
(86) Internationale Anmeldenummer: PCT/EP2001/014183
(87) Internationale Veröffentlichungsnummer: WO 2002/052774

(56) Entgegenhaltungen:
- EP-A- 0 859 495
- EP-A- 0 924 864
- EP-A- 0 991 289
- US-A- 5 887 021
- US-A- 5 983 105

## Beschreibung

Die Erfindung betrifft ein Verfahren und eine Anordnung zum digitalen Empfang eines Signals, insbesondere eines Rundfunksignals in Fahrzeugen.

Üblicherweise werden Empfänger, insbesondere Rundfunkempfänger in Fahrzeugen, zunehmend digital ausgeführt. Dies ist insbesondere durch die großen Fortschritte in der Rechengeschwindigkeit von Signalprozessoren und der Leistungsfähigkeit von Analog-Digital-Wandlern (im weiteren A/D-Wandler genannt) ermöglicht. Die Antenne als Schnittstelle stellt dabei eine Grenze für die Güte des Empfangs dar. Beispielsweise werden bei einer Verschaltung mehrerer Antennen zur Verbesserung des Signal-Rausch-Verhältnisses die aus den Antennen ausgekoppelten Signale überlagert. Dabei werden über ein Hochfrequenzkabel alle Empfangsmischer mittels eines Mutteroszillators versorgt. Bei Abwärtsmischung direkt an der Antenne muß das Signal des Mutteroszillators zu allen Antennenfußpunkten geführt werden. Nachteilig dabei ist, daß die Installation für die Taktverteilung über ein abgeschirmtes Hochfrequenzkabel besonders aufwendig und kostenintensiv ist. Somit ist ein derartiger Empfänger weitgehend ungeeignet für den Einsatz in einem Fahrzeug.

EP924864 ( Delco Electronics Corp. ) offenbart einen digitalen Rundfunkempfänger mit mehreren Antennen, denen jeweils ein Teil-Empfänger zugeordnet ist. Diese Teil-Empfänger sind über individuelle Leitungen in Sternform mit einer zentralen Steuereinheit verbunden.

Aufgabe der Erfindung ist es daher, eine Anordnung zum digitalen Empfang eines Signals, insbesondere eines Rundfunksignals, anzugeben, welche ein gegenüber dem Stand der Technik verbessertes Signal-Rausch-Verhältnis aufweist. Darüber hinaus ist es Aufgabe der Erfindung, ein besonders geeignetes Verfahren anzugeben.

Die erstgenannte Aufgabe wird erfindungsgemäß gelöst durch eine Anordnung zum digitalen Empfang eines Signals, insbesondere eines Rundfunksignals, umfassend eine Mehrzahl von Antennen, denen jeweils ein Teil-Empfänger zugeordnet ist, wobei die Teil-Empfänger über einen Datenbus mit einer zentralen Steuereinheit zur Synchronisierung und Überlagerung von aus den Antennen ausgekoppelten Antennensignalen verbunden sind. Durch eine derartige Verschaltung mehrerer Antennen, insbesondere zu einem sogenannten Antennenarray, mit mehreren Teil- oder Sub-Empfängern und deren Kopplung mit einer zentralen Steuereinheit ist eine Überlagerung der ausgekoppelten Antennensignale ermöglicht. Hierdurch ist ein besonders gutes Signal-Rausch-Verhältnis gegeben, wobei die Pegel von unerwünschten Signalen unterdrückt werden. Im Gegensatz zu den herkömmlichen Lösungen werden die Teil-Empfänger über einen gemeinsamen Datenbus synchronisiert. Dabei kann der gleiche Datenbus verwendet werden, welcher von anderen digitalen Systemen des Fahrzeugs genutzt wird, wie z.B. von einem Navigations- oder Ortungssystem, Videosystem. Durch eine derartige Einbindung und miteinander Vernetzung des Radioempfängers mit anderen Systemen des Fahrzeugs über ein- und desselben Datenbus, insbesondere über einen optischen Datenbus, ist eine besonders einfache Vernetzung und Verkabelung der Anordnung ohne zusätzlichen Aufwand gegeben.

Zweckmäßigerweise umfaßt der oder jeder Teil-Empfänger einen A/D-Wandler zur Umwandlung des jeweiligen analogen Antennensignals in ein digitales Antennensignal. Hierdurch werden die Antennensignale bevorzugtermaßen direkt nach der Antenne mittels des zugehörigen A/D-Wandler des Teil-Empfängers digitalisiert. Je nach Art und Ausführung der Anordnung umfaßt der Teil-Empfänger einen Mischer zur Mischung des digitalen Antennensignals auf eine Zwischenfrequenz. Bei Verwendung des zentralen Datenbusses nicht nur zur Synchronisation der Teilempfänger weist der Teilempfänger vorzugsweise zusätzlich einen Lokaloszillator zur lokal gestützten Taktversorgung auf.

Vorteilhafterweise ist die Steuereinheit zur kohärenten Überlagerung der digitalisierten Antennensignale vorgesehen. Insbesondere ist dies durch die gemeinsame Synchronisierung der Einzel- oder Teil-Empfänger und deren phasenstarre Bearbeitung ermöglicht. Durch die kohärente Überlagerung der empfangenen Antennensignale und durch eine geeignete Gewichtung dieser Signale mittels der zentralen Steuereinheit ist eine Richtwirkung der Antennenanordnung bewirkt, die wiederum zu möglichst guten Empfangseigenschaften der Anordnung, insbesondere zu einer Verbesserung des Signal-Rausch-Verhältnisses, beiträgt.

In bevorzugter Ausgestaltung der Anordnung ist die Steuereinheit zur zentralen Synchronisierung der Teil-Empfänger anhand eines Master-Takts vorgesehen. Somit erfolgt die Synchronisierung der Abtastung sowie gegebenenfalls der vor der Abtastung befindlichen Mischung über den gleichen digitalen Datenbus, insbesondere einen optischen Datenbus. Dabei werden die Teil-Empfänger bevorzugtermaßen zentral anhand des Master-Takts derart synchronisiert, daß die Flanken der Antennensignale oder Nutzdaten ausgewertet werden.

Die zweitgenannte Aufgabe wird erfindungsgemäß gelöst durch ein Verfahren zum digitalen Empfang eines Signals, insbesondere eines Rundfunksignals, bei dem von einer Mehrzahl von Antennen, denen jeweils ein Teil-Empfänger zugeordnet ist, Antennensignale ausgekoppelt werden, die über einen Datenbus mittels einer zentralen Steuereinheit synchronisiert und überlagert werden. Dabei werden die Signale in der zentralen Steuereinheit derart überlagert, daß sich das Signal-Rauschverhältnis des gesamten empfangenen Signals verbessert oder der Pegel von unerwünschten Signalen reduziert wird. Bevorzugtermaßen werden die digitalisierten Antennensignale kohärent überlagert. Insbesondere bei niedrigen Frequenzen (z.B. Langwelle, Mittelwelle) lassen sich die Antennensignale und somit die Antennenflächen des Antennenarrays direkt addieren, wodurch eine durch die Anzahl der einzelnen Antennen verbesserte Empfangsleistung bei gleichzeitiger Verbesserung des Signal-Rausch-Verhältnisses gegeben ist. Für eine Phasenstabilität der Anordnung werden vorzugsweise die jeweiligen Antennensignale mittels des zugehörigen Teil-Empfängers auf eine Zwischenfrequenz zusätzlich zur direkten Taktversorgung durch den Master-Takt oszilliert.

Die mit der Erfindung erzielten Vorteile bestehen insbesondere darin, daß durch die Verwendung eines gemeinsamen Datenbusses, insbesondere eines optischen Datenbusses, für die Synchronisierung, Verteilung und Überlagerung der von mehreren Antennen ausgekoppelten und mittels zugehöriger Teil-Empfänger empfangenden Antennensignale ein gegenüber dem Stand der Technik verbesserte Empfangsqualität ermöglicht ist. Ein derartig bei Verwendung eines optischen Datenbusses optisch synchronisierter Radioempfänger weist ein besonders gutes Signal-Rausch-Verhältnis auf. Durch die Verwendung eines Datenbusses kann die Anordnung beispielsweise auch in bestehenden Fahrzeugen mit vorhandenem Datenbus ohne zusätzlichen Verkabelungsaufwand nachgerüstet werden.

Ausführungsbeispiele der Erfindung werden anhand einer Zeichnung näher erläutert. Darin zeigen:
- FIG 1: schematisch eine Anordnung zum digitalen Empfang eines Signals mit mehreren Antennen und mit mehreren an einen Datenbus gekoppelten Teil-Empfängern, und
- FIG 2: schematisch eine Taktrückgewinnung für einen Teil-Empfänger gemäß Figur 1.

Einander entsprechende Teile sind in allen Figuren mit den gleichen Bezugszeichen versehen.

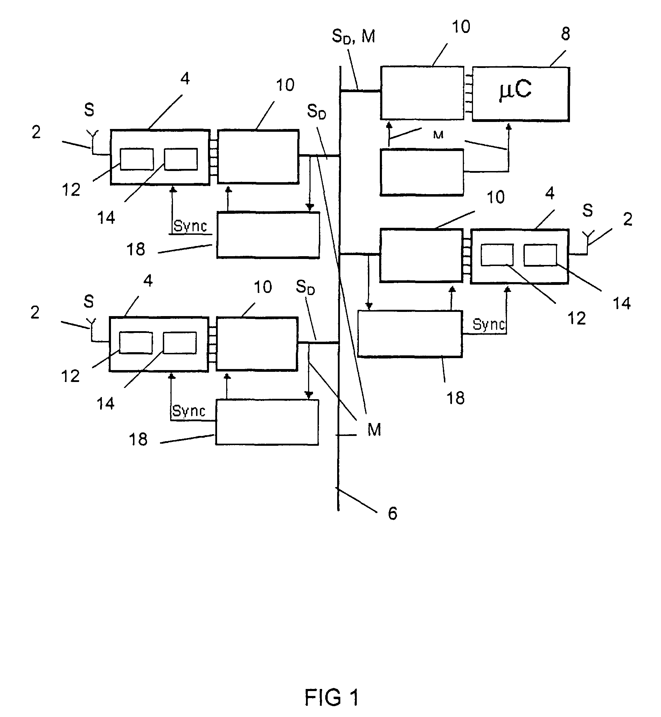

In Figur 1 ist eine Anordnung 1 zum digitalen Empfang (im weiteren Empfänger 1 genannt) eines Signals S, insbesondere eines Rundfunksignals, dargestellt. Als Empfänger 1 dient beispielsweise ein digitaler Rundfunkempfänger in einem Fahrzeug. Der Empfänger 1 umfaßt eine Mehrzahl von Antennen 2 und eine der Anzahl der Antennen 2 entsprechende Anzahl von Teil-Empfängern 4. Die Antennen 2 können dabei in der Art eines Antennenarrays geschaltet sein. Die Teil-Empfänger 4 sind über einen Datenbus 6 mit einer zentralen Steuereinheit 8 verbunden. Als Steuereinheit 8 dient beispielsweise ein Mikrocontroller oder ein Personalcomputer. Zur Kopplung des jeweiligen Teil-Empfängers 4 bzw. der zentralen Steuereinheit 8 an den Datenbus 6 ist eine zugehörige Busschnittstelle 10 vorgesehen. Je nach Art und Ausführung des Datenbusses 6 oder des Übertragungsmediums ist eine entsprechende Busschnittstelle 10 vorgesehen. Als Datenbus 6 dient beispielsweise ein optisches Übertragungsmedium, z.B. ein Lichtwellenleiter. Alternativ kann als Übertragungsmedium ein Koaxialkabel verwendet werden.

Mittels eines Analog/Digital-Wandlers 12 (im weiteren A/D-Wandler genannt) des jeweiligen Teil-Empfängers 4 wird das von der zugehörigen Antenne 2 ausgekoppelte analoge Antennensignal S direkt nach der betreffenden Antenne 2 digitalisiert. Alternativ kann das Antennensignal S nach einer Mischerstufe 14 mittels des A/D-Wandlers 12 digitalisiert werden. Die digitalisierten und ggf. mittels des Teil-Empfängers 4 digital vorverarbeiteten Antennensignale S_{D} werden über den Datenbus 6 an die zentrale Steuereinheit 8 gesendet. Bei der Übertragung der Antennensignale S_{D} an die zentrale Steuereinheit 8 werden diese mittels eines Mastertakts M eines Mastermoduls 16 der Steuereinheit 8 über den gleichen Datenbus 6 synchronisiert. Die Synchronisierung der Teil-Empfänger 4, insbesondere der Abtastung oder ggf. der vor der Abtastung ausgeführten Mischung mittels der Mischerstufe 14, erfolgt dabei anhand einer Auswertung der Flanken der digitalisierten Antennensignale S_{D}. Dabei werden die einzelnen an den Datenbus 6 gekoppelten digitalen Teil-Empfänger 4 anhand eines aus dem Mastertakt M resultierenden Synchronisierungstakt Sync synchronisiert und phasenstarr betrieben. Alternativ oder zusätzlich weist jeder Teil-Empfänger 4 eine Taktversorgungseinheit 18 zur Taktversorgung des betreffenden Teil-Empfängers 4. Eine derartige lokale Taktversorgungseinheit 18 dient zur Stützung der Taktversorgung bei Ausfall des Mastertakts M der zentralen Steuereinheit 8 sowie ggf. aufgrund der nicht ausschließlichen Verwendung des Datenbusses 6 zur Synchronisation der Teil-Empfänger 4.

Die an die Steuereinheit 8 übertragenen digitalisierten Antennensignale S_{D} der Teil-Empfänger 4 werden mittels der Steuereinheit 8 derart kohärent überlagert, daß das Signal-Rausch-Verhältnis des empfangenden Signals S verbessert wird oder unerwünschte Signale im Pegel unterdrückt werden. Durch eine kohärente Überlagerung der Antennensignale S_{D} für Frequenzen, deren Wellenlänge kleiner gleich der Größenordnung eines Antennenabstands ist, ist eine Richtcharakteristik mit einem noch besseren Signal-Rausch-Verhältnis gegeben. Zusätzlich können die digitalisierten Antennensignale S_{D} mittels der Steuereinheit 8 derart gewichtet werden, daß eine Richtwirkung eines aus den Antennen 2 gebildeten Antennensystems, z.B. eines Antennenarrays, erzeugbar ist. Darüber hinaus können bei niedrigen Frequenzen, z.B. Langwelle oder Mittelwelle, die Antennenflächen direkt addiert werden. Hierdurch ist eine durch die Anzahl der Antennen 4 verbesserte Empfangsleistung gegeben.

Aus den Anforderungen an die Störkanal-Unterdrückung ergibt sich ferner eine erforderliche Phasensynchronität der gesamten Anordnung 1. Beispielsweise ergibt sich bei einer Empfangsfrequenz von 100 MHz und einem Signal/Notch-Verhältnis von 10 dB eine Zeitsynchronität von 318 ps, bei einem Signal/Notch-Verhältnis von 20 dB eine Zeitsynchronität von 31,8 ps für die Antennensignale S. Derartige Zeitjitter sind insbesondere durch einen Datenbus 6 mit einem möglichst breitbandigen, z.B. optischen, Übertragungsmedium ermöglicht.

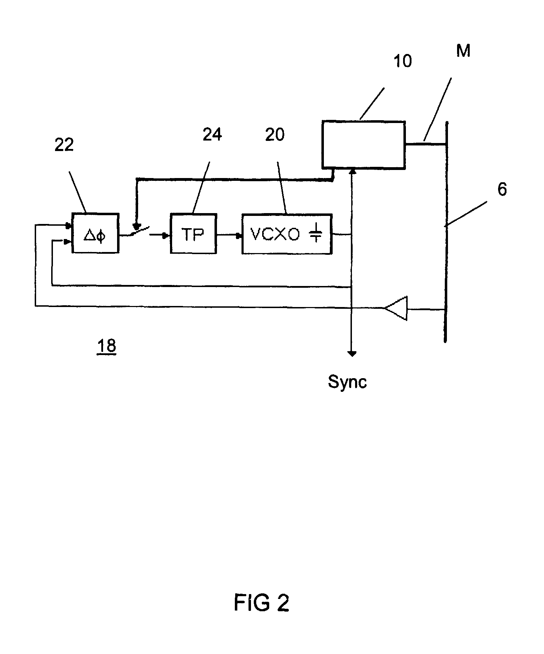

Zur Rückgewinnung des Mastertakts M oder Synchronisiertakts ist in Figur 2 die Taktversorgungseinheit 18 schematisch dargestellt. Die Taktversorgungseinheit 18 ist beispielsweise als eine Phasenregelschleife (auch kurz PLL Phase Locked Loop genannt) ausgeführt. Die Taktversorgungseinheit 18 umfaßt einen Oszillator 20, z.B. einen Quarzoszillator, einen Phasenvergleicher 22, z.B. einen Multiplizierer, und einen Tiefpaß 24. In Abhängigkeit vom Protokoll des Datenbusses 6 bzw. in Abhängigkeit vom fehlenden Mastertakt M für die direkte Taktversorgung der Teil-Empfänger 4 wird in der jeweiligen lokalen Taktversorgungseinheit 18 Phasenstabilität mittels der Phasenregelschleife, insbesondere des Oszillators 20, erreicht. Dazu wird mittels der Busschnittstelle 10 anhand des Protokolls der Eingang der Daten vom Mastertakt M der Steuereinheit 8 bestimmt und die Phasenregelschleife der Taktversorgungseinheit 18 geschlossen, so daß der Oszillator 20 mit dem Mastertakt M synchronisiert wird. Der Oszillator 20 der Phasenregelschleife ist dabei derart ausgeführt, daß eine hinreichende Allan-Varianz für die Überbrückung der Zeit gegeben ist, in welcher keine Daten und somit kein Mastertakt M von der Steuereinheit 8 gesendet werden bzw. in welcher der Datenbus 6 von anderen Systemen oder Diensten verwendet wird. Somit werden mittels einer derartigen Taktsynchronisierungs-Schaltung Pausen in der Übermittlung des Referenz- oder Mastertakts M überbrückt, wobei der betreffende Teil-Empfänger 4 anhand des gehaltenen Synchronisierungstaktes Sync synchronisiert wird.

## Patentansprüche

1. Anordnung (1) zum digitalen Empfang eines Signals (S) umfassend eine Mehrzahl von Antennen (2), denen jeweils ein Teil-Empfänger (4) zugeordnet ist, wobei die Teil-Empfänger (4) über ei-nen gemeinsamen Datenbus (6) mit einer zentralen Steuereinheit (8), zur Synchronisierung und Oberlagerung von aus den Antennen (4) ausgekoppelten Antennensignalen (S) verbunden sind.

2. Anordnung nach Anspruch 1, bei der der Teil-Empfänger (4) einen A/D-Wandler (12) zur Umwandlung des jeweiligen analogen Antennensignals (S) in ein digitales Antennensignal (S_{D}) umfaßt.

3. Anordnung nach Anspruch 1 oder 2, bei der der Teil-Empfänger (4) einen Mischer (14) zur Mischung des ausgekoppelten Antennensignals (S) auf eine Zwischenfrequenz umfaßt.

4. Anordnung nach einem der Ansprüche 1 bis 3, bei der ein Oszillator (20) zur Taktversorgung des zugehörigen Teil-Empfängers (4) vorgesehen ist.

5. Anordnung nach einem der Ansprüche 1 bis 4, bei der die Steuereinheit (8) zur kohärenten Überlagerung der digitalisierten Antennensignale (S_{D}) vorgesehen ist.

6. Anordnung nach einem der Ansprüche 1 bis 5, bei der die Steuereinheit (8) zur Synchronisierung der Teil-Empfänger (4) anhand eines Master-Takts (M) ein Mastermodul (16) umfaßt.

7. Verfahren zum digitalen Empfang eines Signals (S), bei dem von einer Mehrzahl von Antennen (2), denen jeweils ein Teil-Empfänger (4) zugeordnet ist, Antennensignale (S) ausgekoppelt werden, die über einen gemeinsamen Datenbus (6) mittels einer zentralen Steuereinheit (8) synchronisiert und überlagert werden.

8. Verfahren nach Anspruch 7, bei der die jeweiligen Antennensignale (S) mittels des zugehörigen Teil-Empfängers (4) digitalisiert werden.

9. Verfahren nach Anspruch 7 oder 8, bei der die jeweiligen Antennensignale (S) mittels des zugehörigen Teil-Empfängers (4) auf eine Zwischenfrequenz gemischt werden.

10. Verfahren nach einem der Ansprüche 7 bis 9, bei der die digitalisierten Antennensignale (S_{D}) kohärent überlagert werden.

11. Verfahren nach einem der Ansprüche 7 bis 10, bei der die Teil-Empfänger (4) zentral anhand eines Master-Takts (M) synchronisiert werden.

12. Verfahren nach einem der Ansprüche 8 bis 11, bei der die Synchronisierung anhand der Auswertung der Flanken von Nutzdaten erfolgt.

13. Rundfunkempfänger zum digitalen Empfang eines Signales **dadurch gekennzeichnet, daß** er eine der Anordnungen gemäß einem der Ansprüche 1-6 umfasst.

14. Verfahren zum digitalen Empfang eines Rundfunksignales **dadurch gekennzeichnet, daß** es eines der Verfahren gemäß einem der Ansprüche 7-12 umfasst.

## Claims

1. An arrangement (1) for digital reception of a signal (S) comprising two or more antennas (2) each of which has an associated receiver element (4), with the receiver elements (4) being connected via a common data bus (6) to a central control unit (8) for synchronization and superimposition of antenna signals (S) which are emitted from the antennas (4).

2. Arrangement according to Claim 1, in which the receiver element (4) has an A/D converter (12) for conversion of the respective analog antenna signal (S) to a digital antenna signal (S_{D}).

3. Arrangement according to Claim 1 or 2, in which the receiver element (4) has a mixer (14) for mixing the emitted antenna signal (S) to form an intermediate frequency.

4. Arrangement according to one of Claims 1 to 3, in which an oscillator (20) is provided for the clock supply for the associated receiver element (4).

5. Arrangement according to one of Claims 1 to 4, in which the control unit (8) is provided for coherent superimposition of the digitized antenna signals (S_{D}).

6. Arrangement according to one of Claims 1 to 5, in which the control unit (8) has a master module (16) for synchronization of the receiver elements (4) using a master clock (M).

7. Method for digital reception of a signal (S) in which antenna signals (S) are emitted from two or more antennas (2), each of which has an associated receiver element (4), and are synchronized and superimposed via a common data bus (6) by means of a central control unit (8).

8. Method according to Claim 7, in which each of the antenna signals (S) are digitized by means of the associated receiver element (4).

9. Method according to Claim 7 or 8, in which each of the antenna signals (S) are mixed by means of the associated receiver element (4) to form an intermediate frequency.

10. Method according to one of Claims 7 to 9, in which the digitized antenna signals (S_{D}) are superimposed coherently.

11. Method according to one of Claims 7 to 10, in which the receiver elements (4) are synchronized centrally using a master clock (M).

12. Method according to one of Claims 8 to 11, in which the synchronization is carried out by evaluation of the flanks of user data.

13. Broadcast radio receiver for digital reception of a radio signal, **characterized in that** the receiver comprises one of the arrangements according to one of Claims 1 to 6.

14. Method for digital reception of a broadcast radio signal, **characterized in that** the method comprises one of the methods according to one of Claims 7 to 12.

## Revendications

1. Dispositif (1) pour la réception numérique d'un signal (S), comprenant une pluralité d'antennes (2), auxquelles est chaque fois associé un récepteur partiel (4), dans lequel les récepteurs partiels (4) sont raccordés par un bus de données commun (6) à une unité centrale de commande (8) en vue de la synchronisation et de la superposition de signaux d'antenne (S) découplés des antennes (4) .

2. Dispositif selon la revendication 1, dans lequel le récepteur partiel (4) comprend un convertisseur analogique-numérique (12) pour la conversion de chaque signal d'antenne analogique (S) en un signal d'antenne numérique (S_{D}).

3. Dispositif selon la revendication 1 ou 2, dans lequel le récepteur partiel (4) comprend un mélangeur (14) pour le mélange du signal d'antenne découplé (S) à une fréquence intermédiaire.

4. Dispositif selon l'une quelconque des revendications 1 à 3, dans lequel il est prévu un oscillateur (20) pour le cadencement par horloge du récepteur partiel correspondant (4).

5. Dispositif selon l'une quelconque des revendications 1 à 4, dans lequel l'unité de commande (8) est prévue pour la superposition cohérente des signaux d'antenne numérisés (S_{D}).

6. Dispositif selon l'une quelconque des revendications 1 à 5, dans lequel l'unité de commande (8) comprend un module maître (16) pour la synchronisation des récepteurs partiels (4) à l'aide d'une horloge maître (M).

7. Procédé pour la réception numérique d'un signal (S), dans lequel on découple d'une pluralité d'antennes (2), auxquelles est chaque fois associé un récepteur partiel (4), des signaux d'antenne (S) qui sont synchronisés et superposés via un bus de données commun (6) au moyen d'une unité centrale de commande (8).

8. Procédé selon la revendication 7, dans lequel on numérise chaque signal d'antenne (S) au moyen du récepteur partiel correspondant (4).

9. Procédé selon la revendication 7 ou 8, dans lequel on mélange chaque signal d'antenne (S) à une fréquence intermédiaire au moyen du récepteur partiel correspondant (4).

10. Procédé selon l'une quelconque des revendications 7 à 9, dans lequel on superpose de manière cohérente les signaux d'antenne numérisés (S_{D}).

11. Procédé selon l'une quelconque des revendications 7 à 10, dans lequel on synchronise les récepteurs partiels (4) de manière centrale à l'aide d'une horloge maître (M).

12. Procédé selon l'une quelconque des revendications 8 à 11, dans lequel on opère la synchronisation par l'évaluation des flancs de données utiles.

13. Récepteur de radiodiffusion pour la réception numérique d'un signal, **caractérisé en ce qu'**il comprend un des dispositifs selon l'une quelconque des revendications 1 à 6.

14. Procédé pour la réception numérique d'un signal de radiodiffusion, **caractérisé en ce qu'**il comprend un des procédés selon l'une quelconque des revendications 7 à 12.
